# EUROPÄISCHE PATENTSCHRIFT

(11) **EP 0 752 068 B1**
(45) Veröffentlichungstag und Bekanntmachung des Hinweises auf die Patenterteilung: **07.10.1998**
(21) Anmeldenummer: 95910561.0
(22) Anmeldetag: 07.03.1995
(51) Int. Cl.: F16B 25/10

(54) **BOHRER, INSBESONDERE BOHRSCHRAUBE**
DRILL, ESPECIALLY DRILLING SCREW
FORET, NOTAMMENT VIS-FORET

(30) Priorität: 23.03.1994 DE 4410027
(43) Veröffentlichungstag der Anmeldung: 08.01.1997
(73) Patentinhaber: EJOT VERBINDUNGSTECHNIK GmbH & Co. KG, D-57334 Bad Laasphe (DE)
(72) Erfinder: KÖNIG, Gottfried, D-57334 Bad Laasphe (DE)
(74) Vertreter: Bardehle, Heinz, Dipl.-Ing.
(86) Internationale Anmeldenummer: EP9500841
(87) Internationale Veröffentlichungsnummer: WO9525901

(56) Entgegenhaltungen:
- DE-C- 4 003 374
- US-A- 2 621 548
- US-A- 3 715 952

## Beschreibung

Die Erfindung bezieht sich auf einen Bohrer mit einem Bohrschaft, insbesondere mit einem ein selbstfurchendes Gewinde aufweisenden Schraubenschaft, und einem dem Antriebsende des Schaftes gegenüberliegend angeordneten gabelförmigen Bohrplättchen aus hartem Material, das in eine Halterung im Schaft eingesetzt ist, die zwei diametral zueinanderliegende Nuten im Schaft zur Aufnahme von Zinken des Bohrplättchens aufweist, dessen Breite dem Durchmesser des Bohrschachtes entspricht. Bei dem Bohrer kann es sich also aufgrund einer Gestaltung seines Schaftes mit einem selbstfurchenden Gewinde auch und vorzugsweise um eine Bohrschraube handeln.

Ein solcher mit einem Bohrplättchen versehener Bohrer ist in der US-PS 3 715 952 beschrieben. Bei diesem Bohrer ist das Bohrplättchen in einen am Bohrende des Bohrschaftes vorgesehenen, durchgehenden Querschlitz eingesetzt, der für die Übertragung des Drehmoments auf das Bohrplättchen sorgt und dessen Grund das Widerlager für die Aufnahme der axialen Bohrkraft bildet, da das Bohrplättchen sich in seinem mittleren Bereich gegen den Grund des Querschlitzes abstützt. Das Bohrplättchen weist an seinen seitlichen Rändern axial zum Bohrschaft verlaufende Arme auf, die sich vom Bohrplättchen weg verjüngen, wobei diese Verjüngung offenbar zur erleichterten Einführung der Arme in zusätzlich vorgesehene axiale Nuten im Bohrschaft dient, die breiter als der Querschlitz sind. Beim Bohren legt sich ein Arm einseitig an jeweils eine Wand einer Nut an und trägt damit zur Übertragung des Drehmomentes vom Bohrschaft auf das Bohrplättchen bei, wobei dies allerdings auf denjenigen Bereich der Arme beschränkt ist, der keine Verjüngung aufweist. Die Nuten dienen außerdem zur Ableitung von Bohrspänen bzw. sonstigem herausgebohrtem Material und lassen daher neben den Armen des Bohrplättchens einen ausreichenden Zwischenraum frei. Das dem Bohrplättchen zugewandte Ende des Bohrschaftes ist mit seinem Querschlitz und den gegenüber dem Bohrplättchen verbreiterten Nuten also relativ kompliziert geformt.

Es ist weiterhin aus der US-PS 2,621,548 ein Bohrer bekannt, der aus einem Bohrschaft und einem in dessen führendes Ende eingesetzten Bohrplättchen besteht. Das Bohrplättchen ist in einem durchgehenden Querschlitz des Bohrschachtes verankert, wobei die Breite des Querschlitzes erheblich über dem Durchmesser des Bohrschaftes hinausgeht. Infolge dessen besteht für dieses Bohrplättchen bei höherer Belastung die große Gefahr, daß mangels Abstützung sich seine Ränder verbiegen oder ausbrechen. Der für die Halterung des Bohrplättchens vorgesehene durchgehende Schlitz gibt dem betreffenden Ende des Bohrschaftes eine relativ aufwendige Gestaltung. Hinzu kommt noch, daß die Halterung des Bohrplättchens zusätzlich durch einen Stift bzw. eine Schraube gesichert wird, was den Aufwand für die Herstellung des Bohrschaftes weiterhin erhöht.

Eine andersartige Befestigung eines Schneidplättchens am Bohrschaft einer Bohrschraube ist in der DE-PS 4 003 374 offenbart, die auf dem Prinzip beruht, einen von der Mitte des Bohrplättchens ausgehenden Fortsatz des Bohrplättchens zu halten, der in eine zentrische Ausnehmung des dem Bohrplättchen zugewandten Endes des Schraubenschaftes mit Preßsitz eingedrückt ist. Die Übertragung der axialen Bohrkraft erfolgt dabei von der Stirnseite des Fortsatzes auf den Grund der Ausnehmung. Um das Drehmoment, das durch die form- und kraftschlüssige Verbindung von Vorsprung und Ausnehmung übertragen wird, zu erhöhen, ist das Schneidplättchen neben dem Vorsprung mit von dem Schneidplättchen abragenden Leisten versehen, die gemäß Figur 14 der Druckschrift in entsprechend geformte Nuten in dem betreffenden Ende des Schraubenschaftes eingreifen. Die beiden Leisten verlaufen ebenso wie die Nuten parallel zueinander und besitzen eine Länge, die etwa der Tiefe der Ausnehmung entspricht, wobei die Enden der Leisten einen geringen Abstand vom Ende der Nuten einhalten, so daß also die Aufnahme der axialen Bohrkraft von der Stirnseite des Fortsatzes über den Grund der Ausnehmung erfolgt. Auch diese Gestaltung des betreffenden Endes des Schraubenschaftes ist relativ kompliziert, da sie außer der Ausnehmung zusätzlich noch die beiden Nuten aufweist. In der Druckschrift ist noch eine Variante zu der vorstehend erläuterten Ausführung gemäß Figur 14 beschrieben, die darauf hinausläuft, anstelle der beiden Nuten einen ringförmigen Absatz mit der Tiefe der Nuten auszubilden, so daß an dem betreffenden Ende des Schraubenschaftes neben der Ausnehmung ein ringförmiger Kragen stehenbleibt, der die Ausnehmung umfaßt und an jeder beliebigen Winkelstellung des Bohrplättchens zum Schraubenschaft die beiden Leisten des Bohrplättchens aufnehmen kann, die dann allerdings mangels seitlicher Widerlager kaum noch ein Drehmoment übertragen können. Die Drehmomentübertragung kann dabei nur durch den Preßsitz des Fortsatzes in der Ausnehmung erfolgen. Die vorstehend behandelten Gestaltungen einer Verbindung eines Bohrplättchens mit dem betreffende Ende eines Schraubenschaftes gemäß der DE-PS 40 03 374 sind also von dem Gedanken beherrscht, die Befestigung des Bohrplättchens durch die Verbindung von Fortsatz und Ausnehmung herbeizuführen. Die aufwendige Konstruktion des betreffenden Endes des jeweiligen Bohrschaftes hat auch eine entsprechende Gestaltung des Bohrplättchens zur Folge, was den Gesamtaufwand für den Bohrer entsprechend erhöht.

Die vorstehend erläuterte Gestaltung gemäß der DE-PS 40 03 374 beruht auf der grundlegenden Überlegung, das betreffende Ende des Bohrschaftes mit einer zentrischen Ausnehmung zur Halterung des Bohrplättchens zu versehen. Hierfür zeigt der Stand der Technik zwei Varianten, nämlich eine konzentrische Bohrung mit darin eingelötetem Bohrplättchen (DE-OS 25 55 647) oder einen mittig durchgehender Schlitz mit diesen ausfüllendem Bohrplättchen (DE-PS 28 01 962). Dieser grundlegenden Konzeption folgt auch die DE-PS 40 03 374 aufgrund der in ihr offenbarten zentrischen Ausnehmung am Ende des Bohrschaftes.

Die Erfindung schlägt dem gegenüber einen grundsätzlich anderen Weg ein. Ihr liegt die Aufgabe zugrunde, die Verbindung zwischen einem Bohrschaft bzw. Schraubenschaft und einem Bohrplättchen unter Gewährleistung der Möglichkeit einer hohen Drehmomentübertragung einfacher zu gestalten, wobei die Zentrierung des Bohrplättchens gegenüber der Achse des Bohr- bzw. Schraubenschaftes gewährleistet sein muß. Erfindungsgemäß geschieht dies dadurch, daß der Schaft stumpf in einer im wesentlichen radial ebenen Abschlußfläche endet, aus der die Nuten zum Antriebsende hin derart verlaufen, daß allein die in die Nuten axial eingedrückten und in diesen satt sitzenden beiden Zinken des Bohrplättchens dieses selbsthemmend am Schaft halten, und daß das Drehmoment vom Schaft über die Wände der Nuten auf beide Zinken übertragen wird.

Bei dieser Gestaltung des Bohr- bzw. Schraubenschaftes, dessen stumpfes Ende unproblematisch herzustellen ist, genügt es für die Anbringung des Bohrplättchens lediglich die beiden diametral zueinander liegenden Nuten vorzusehen. Derartige Nuten können durch entsprechende Werkzeuge eingepreßt bzw. geschlagen werden. Es ist auch möglich, die Nuten spanabhebend einzuschneiden oder einzustoßen. Auf irgendeine besonders komplizierte Formgebung an dem betreffenden Ende des Schaftes ist dabei also nicht zu achten. Entsprechend einfach ist auch das Plättchen gestaltet, das lediglich außer seinem eigentlichen Bohrteil zwei Zinken aufweist. Mit diesen beiden Zinken in Verbindung mit den Nuten läßt sich sowohl die selbsthemmende Halterung des Bohrplättchens am Schaft als auch die Drehmomentübertragung gewährleisten, ohne daß hierfür weitere Gestaltungselemente erforderlich sind. Dabei erfolgt auch die Zusammenfügung von Schaft und Bohrplättchen auf denkbar einfache Weise, nämlich lediglich durch Eindrücken der Zinken des Bohrplättchens in die Nuten, ohne daß dafür irgendwelche besonderen Kräfte, wie z.B. für die Herstellung eines Preßsitzes erforderlich sind. Mit dem Eindrükken der Zinken in die Nuten erfolgt auch automatisch die Zentrierung des Bohrplättchens, da diese durch die axiale Richtung der Nuten automatisch erzwungen wird. Insgesamt ergibt sich somit eine einfache Konstruktion eines Bohrers mit Bohrplättchen, die sich durch geringen Aufwand für Herstellung und Montage auszeichnet.

Die Nuten im Bereich ihrer Aufnahme der Zinken kann man so legen, daß die Nuten parallel zueinander verlaufen, was eine einfache Herstellung der Nuten ermöglicht. Die Selbsthemmung ergibt sich dabei durch die Anpassung der Zinken an den Querschnitt der Nuten.

Es ist auch möglich, die Nuten derart schräg zur Schaftachse in Richtung zum Antriebsende mit derart zunehmendem Abstand ihrer Gründe zu legen, daß die in die Nuten eingedrückten Zinken aufgrund der durch die Schräglage der Gründe auf die Zinken ausgeübten Spreizkraft in den Nuten selbsthemmend gehalten werden. Diese Spreizkraft entsteht beim Eindrücken der Zinken aufgrund der Schräglage der Gründe.

Die selbsthemmende Halterung der Zinken in den Nuten läßt sich dadurch verstärken, daß man die Breite der Nuten so wählt, daß die Zinken von den Wänden der Nuten eingeklemmt sind.

Die Selbsthemmung der in die Nuten eingedrückten Zinken läßt sich weiterhin auf folgende Weise gewährleisten. Einerseits können die Zinken unter Vorspannung an den Gründen anliegen, andererseits kann man die Nuten so gestalten, daß sich die Breite der Nuten radial nach außen vergrößert und die Zinken einen der Nutenform angepaßten Querschnitt aufweisen. Im letzteren Falle genügt es, wenn die Zinken nur an den Wänden der Nuten zur Anlage kommen, ohne daß sie bis zu den Gründen der Nuten reichen, da die Vergrößerung der Breite der Nuten dazu führt, daß sich die entsprechend geformten Zinken gewissermaßen keilförmig in die Nuten einpressen und in diesen verkeilen.

Eine weitere Möglichkeit der Herbeiführung der Selbsthemmung besteht darin, die Nuten so zu gestalten, daß sich ihre Breite in Richtung zum Antriebsende verringert, wobei wiederum die Zinken einen der Nutenform angepaßten Querschnitt aufweisen. In diesem Falle ergibt sich eine Art Auflaufen der Zinken beim Einsetzen in die Nuten gegenüber der Verringerung der Nutenbreite, womit sich die Zinken in axialer Richtung in den Nuten verkeilen.

Eine zusätzliche Möglichkeit der Beschränkung der auf die Zinken wirkenden Spreizkräfte im Falle besonders hoher axialer Bohrkraft besteht darin, daß man die radiale Anlage der Zinken an den Gründen bzw. Wänden der Nuten auf den Anfangsbereich der Zinken in der Nähe der Abschlußfläche des Schaftes beschränkt. In diesem Fälle können sich die auf die Zinken wirkenden Spreizkräfte nur im Anfangsbereich der Zinken auswirken, wo deren Hebelarm wesentlich kürzer ist als am Ende der Zinken. Im Fälle einer Gestaltung der Nuten und Zinken in der Weise, daß die Zinken an den Gründen der Nuten anliegen, bedeutet dies, daß nur im Anfangsbereich der Zinken diese in Berührungskontakt mit den Gründen stehen, während in ihrer Fortsetzung der Zinken diese einen geringen Abstand von den Gründen der Nuten einhalten. Dabei bleiben die Zinken aber nach wie vor für die Übertragung des Drehmoments verantwortlich, da sie sich unabhängig von der besonderen Gestaltung des Anfangsbereichs der Zinken und deren Abstand von den Gründen im Endbereich immer an den Wänden der Nuten abstützen können. Unter dem Anfangsbereich der Zinken in der Nähe der Abschlußfläche ist beispielsweise eine Länge von etwa einem Drittel der Gesamtlänge der Zinken zu verstehen.

Um die Sicherheit der Selbsthaltung der Zinken in dem betreffenden Ende des Schaftes zu erhöhen, kann man die Zinken auf ihrer dem Nutengrund zugewandten Seite mit Ausnehmungen versehen, in die bei einer Kaltverformung des Schraubenschaftes verdrängtes Material eingedrückt ist. Bei dieser Kaltverformung kann es sich um einen sich an das Einsetzen des Bohrplättchens anschließenden Preßvorgang im Bereich der Zinken handeln, bei dem durch Druck auf das Material des Endes des Schaftes dieses veranlaßt wird, in die Ausnehmungen hineinzufließen. Das Bohrplättchen ist dann in besonderer Weise gegen Herausfallen aus den Nuten gesichert. Die Kaltverformung kann auch dadurch herbeigeführt werden, daß hierzu das Wälzen eines Gewindes auf den Schaft ausgenutzt wird, das in diesem Falle bei eingesetztem Bohrplättchen erfolgt, wobei ein erheblicher Druck auf das Material des Schaftes ausgeübt wird. Unter diesem Druck wird dann Material aus dem Schaft in die Ausnehmungen an den Zinken verdrängt.

Das Kaltverformen eines Gewindes, insbesondere das Walzen des Gewindes auf den Schaft kann man auch dazu ausnutzen, den Zinken an ihrer Außenseite ein Längsprofil nach Art des Gewindequerschnitts zu geben, wozu die Nuten und die Zinken so gestaltet werden, daß sie sich bis in das Gewinde des Schaftes erstrecken. Beim Walzen des Gewindes wird dann die Oberfläche des Schaftes zusammen mit den Außenseiten der Zinken entsprechend kalt verformt, das heißt, im Bereich der Zinken setzt sich das auf die Oberfläche des Schaftes aufgewalzte Gewinde in den Zinken fort. Dies ist dann von Vorteil, wenn das harte Material des Bohrplättchens und damit der Zinken dazu ausgenutzt werden soll. ein Gewinde in schlecht bohrbares Material, z.B. rostfreies Material, einzuformen bzw. einzuschneiden.

Um bei Anwendung der schräg verlaufenden Nuten die Selbsthemmung in besonderer Weise sicherzustellen, kann man die im Zusammenlauf der beiden Zinken gebildete Kehle so gestalten, daß diese einen Abstand von der Abschlußfläche des Schaftes einhält. Hierdurch wird vermieden, daß das Bohrplättchen bei seinem Einsetzen in die Nuten im Bereich seiner Kehle an der Abschlußfläche des Schaftes anschlagen kann, bevor die Zinken auf den Gründen der Nuten auflaufen, was das für die Selbsthemmung erforderliche Anliegen der Zinken an den Gründen der Nuten verhindern würde.

Besonders hohe axiale Bohrkräfte lassen sich dann günstig auffangen, wenn man in der Verbindung zwischen Schaft und Bohrplättchen einen Anschlag vorsieht. Diesen Anschlag kann man zweckmäßig in einer Nut anordnen. Es ist aber auch möglich, in der im Zusammenlauf der beiden Zinken sich ergebenden Kehle einen Anschlag vorzusehen, der gegen die Abschlußfläche des Schaftes bei eingesetztem Bohrplättchen anliegt. Bei dieser Gestaltung ist allerdings darauf zu achten, daß im Falle der Verwendung schräg liegender Nuten dieser Anschlag nicht vor dem Auflaufen der Zinken auf den Gründen der Nuten wirksam wird wie dies oben dargelegt ist.

Um bei dem Auflaufen der Zinken auf die Gründe der Nuten bzw. die keilförmig gestalteten Nutenwände zu vermeiden, daß sich die dabei an der Kehle der Zinken auftretenden Spreizkräfte so erhöhen, daß an dieser Stelle eine Bruchgefahr für die Zinken entsteht, bildet man die Kehle zweckmäßig gerundet aus, wodurch man den Spannungslinien innerhalb des betreffenden Endes der Zinken einen abgerundeten, günstigen Verlauf gibt.

Die Möglichkeit der Übertragung besonders hoher Drehmomente ergibt sich dann, wenn man die Breite der Kehle kleiner wählt als die Breite eines Zinkens im Bereich der Kehle. In diesem Falle liegt nämlich jeder Zinken im Bereich der Kehle mit entsprechend großer Fläche gegen die entsprechend hohe Wand der betreffenden Nut an.

In den Figuren sind Ausführungsbeispiele der Erfindung dargestellt. Es zeigen:
- Fig. 1: einen Bohrschaft mit einer im Schnitt gezeichneten Halterung für die Aufnahme eines Bohrplättchens mit parallel zueinander verlaufenden Zinken,
- Fig. 2: das zu dem Bohrschaft gemäß Fig. 1 passende Bohrplättchen in einer Lage, aus der es in die Halterung des Bohrschaftes eingedrückt werden kann,
- Fig. 3: das Bohrplättchen in Seitenansicht,
- Fig. 4: den mit einem Gewinde versehenen Bohrschaft gemäß Fig. 1 zusammen mit dem Bohrplättchen gemäß Fig. 2,
- Fig. 5: einen Ausschnitt aus der Darstellung gemäß Fig. 4 in einer Seitensicht,
- Fig. 6: die Darstellung des Bohrers mit Schraubenschaft gemäß Fig. 4 mit axialer Blickrichtung auf die Schneiden des Bohrplättchens,
- Fig. 7: einen Bohrschaft entsprechend der Darstellung gemäß Fig. 1 in gleicher Ansicht wie Fig. 6, allerdings ohne eingedrücktes Bohrplättchen mit Nuten mit rechteckförmigem Querschnitt,
- Fig. 8: eine Abwandlung der Anordnung gemäß Fig. 7 mit Nuten mit etwa keilförmigem Querschnitt,
- Fig. 9: einen Bohrschaft ähnlich der Darstellung gemäß Fig. 1 mit schräg verlaufenden Nuten,
- Fig. 10: ein in den Bohrschaft gemäß Fig. 9 passendes Bohrplättchen,
- Fig. 11: die Seitensicht des Bohrplättchens gemäß Fig. 10,
- Fig. 12: einen Schraubenschaft entsprechend der Darstellung gemäß Fig. 9 mit eingedrücktem Bohrplättchen gemäß Fig. 10,
- Fig. 13: ein Bohrplättchen ähnlich der Darstellung gemäß Fig. 10, und zwar mit einem Anschlag in der Kehle zwischen den Zinken,
- Fig. 14: einen Ausschnitt aus einem Schraubenschaft mit eingedrücktem Bohrplättchen ähnlich der Anordnung gemäß Fig. 12, und zwar mit Anschlägen im Bereich der Nuten,
- Fig. 15: eine Seitensicht eines Schraubenschaftes mit eingesetztem Bohrplättchen ähnlich der Darstellung gemäß Fig. 5, allerdings mit Nuten, deren Breite in Richtung zum Antriebsende hin sich verringert,
- Fig. 16: einen Bohrschaft ähnlich der Darstellung gemäß Fig. 12 mit eingedrücktem Bohrplättchen, über dessen Zinken sich das Gewinde des Schraubenschaftes teilweise erstreckt,
- Fig. 17: die Anordnung gemäß Fig. 16 in Seitensicht,
- Fig. 18: eine Anordnung ähnlich der Fig. 16 mit inneren Ausnehmungen an den Zinken.

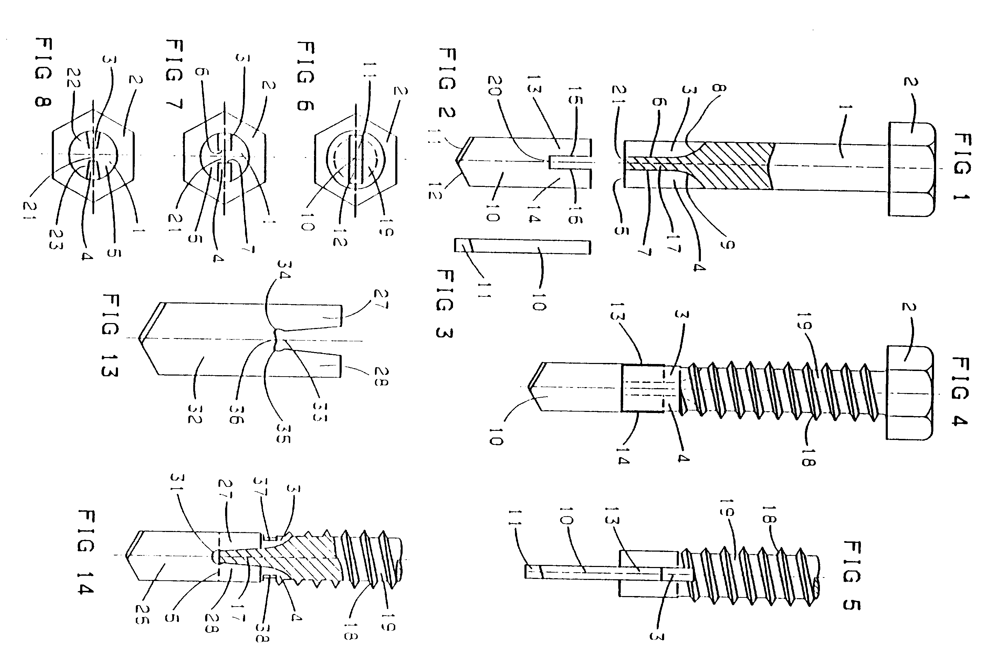

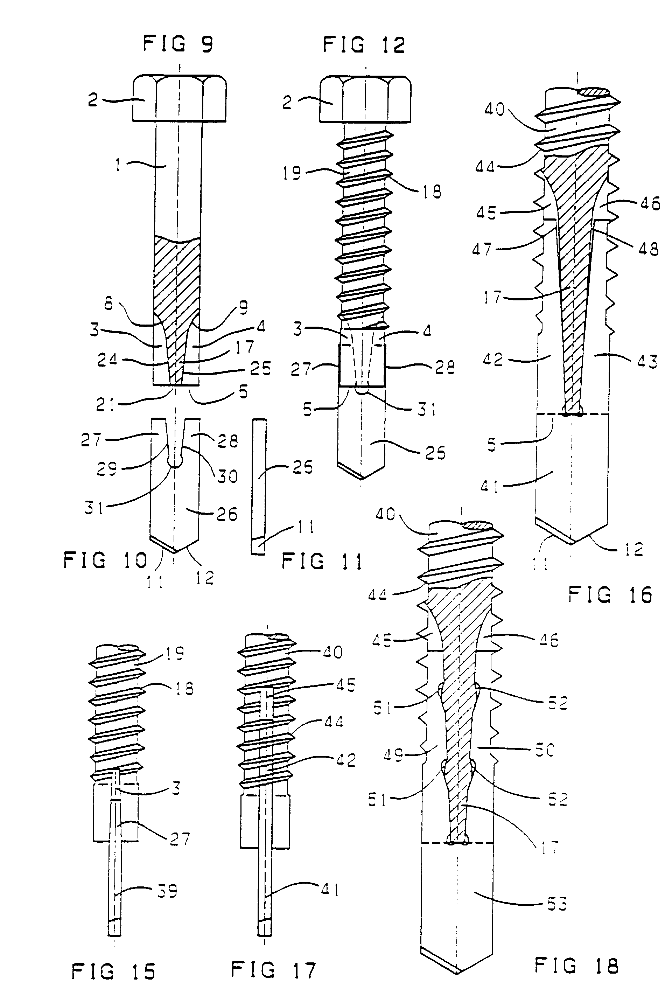

In Fig. 1 ist ein Bohrschaft 1 dargestellt, der an seinem Antriebsende 2 mit einem Sechskantkopf versehen ist, der z.B. dazu dient, in irgendein Antriebswerkzeug eingespannt zu werden. Der untere Teil des Bohrschaftes 1 ist im Schnitt dargestellt, er enthält die beiden Nuten 3 und 4, die sich von der Abschlußfläche 5 des Bohrschaftes 1 in Richtung zum Sechskantkopf erstrecken. Die Lage und der Querschnitt der Nuten 3 und 4 geht aus stirnseitiger Ansicht gemäß Fig. 7 hervor, auf die weiter unten näher eingegangen wird.

Die Gründe 6 und 7 der Nuten 3 und 4 verlaufen über den wesentlichen Teil der Länge der Nuten 3 und 4 parallel zueinander und parallel zu der Längsachse des Bohrschaftes 1. Sie laufen in Rundungen 8 und 9 aus, die hier von der Form einer Kreissäge herrühren, mit der man die Nuten 3 und 4 in den Bohrschaft 1 einbringen kann.

Die Ausformung der Nuten 3 und 4 kann außerdem auch durch andere beliebige Methoden erfolgen, z.B. durch Stoßen oder Pressen, worauf oben bereits hingewiesen worden ist.

Die Nuten 3 und 4 bilden die Halterung für das in den Fig. 2 und 3 dargestellte Bohrplättchen 10, das an seiner Bohrseite mit den beiden Schneiden 11 und 12 und an seiner den Schneiden 11 und 12 abgewandten Seite in gabelförmiger Ausbildung mit den beiden Zinken 13 und 14 versehen ist. Die Innenseiten 15 und 16 der beiden Zinken 13 und 14 verlaufen axial und parallel zueinander und halten einen solchen Abstand voneinander ein, daß sich das Bohrplättchen satt auf den zwischen den beiden Nuten 3 und 4 stehengebliebenen Steg 17 aufschieben läßt, wobei infolge einer Anpassung der Dicke des Bohrplättchens 10 an die Breite der Nuten 3 und 4 bzw. umgekehrt die Zinken 13 und 14 mit den Wänden der Nuten 3 und 4 in Berühungskontakt kommen. Die Zinken 13 und 14 sind dabei so lang ausgebildet, daß sie sich nicht in den Bereich der Rundungen 8 und 9 erstrecken, so daß für die Ausbildung der Zinken 13 und 14 lediglich ein Zwischenraum mit parallelen Seiten herzustellen ist. Wenn jedoch die Zinken 13 und 14 weiter in den Bereich der Nuten 3 und 4 ragen sollen, dann sind gegebenenfalls die Enden der Zinken 13 und 14 entsprechend Rundungen 8 und 9 zu gestalten.

Fig. 3 zeigt die Seitensicht des Bohrplättchens 10 gemäß Fig. 2, das durchgehend mit gleichbleibender Dicke ausgebildet ist, die der Breite der Nuten 3 und 4 angepaßt ist. Ein solches Bohrplättchen kann z.B. ca. 1 mm dick sein. Mit solchen Bohrplättchen zu bohrende Löcher haben meist einen Durchmesser bis ca. 5 mm.

Aus den in Fig. 1 und 2 dargestellten Lagen von Bohrschaft 1 und Bohrplättchen 10 lassen sich diese beiden Teile durch Eindrücken der Zinken 13 und 14 des Bohrplättchens 10 in die Nuten 3 und 4 zusammenfügen, wodurch die Anordnung gemäß Fig. 4 entsteht, die allerdings gegenüber dem in Fig. 1 glatt dargestellten Bohrschaft 1 das Gewinde 18 trägt, das auf einen entsprechenden Durchmesser gewalzt ist, womit dann der in Fig. 4 dargestellte Schraubenschaft 19 entsteht. An dem dem Sechskantkopf 2 abgewandten Ende des Schraubenschaftes 19 befindet sich das Bohrplättchen 10, dessen Zinken (die hier aus Gründen der besseren zeichnerischen Darstellung seitlich geringfügig über den Außendurchmesser des Bohrschaftes 19 vorstehen) in die Nuten 3 und 4 eingedrückt sind.

In der Fig. 5 ist die Anordnung gemäß Fig. 4 in Seitensicht dargestellt, aus der deutlich ersichtlich, wo die Zinken (hier die Zinke 13) in den Nuten (hier die Nut 3) enden.

Ergänzend sei auf die Fig. 6 verwiesen, in der der Schraubenschaft 19 mit eingesetztem Bohrplättchen 10 von der Seite des Bohrplättchens her gesehen dargestellt ist.

Aufgrund ihrer satten Aufnahme der Zinken 13 und 14 in den Nuten 3 und 4 ergibt sich eine selbsthemmende Verbindung zwischen Schaft 1 bzw. 19 und Bohrplättchen 10, das nach seinem Eindrücken von selbst nicht mehr aus der durch die Nuten 3 und 4 gebildeten Halterung am Schaft 1 bzw. 19 herausfallen kann. Normalerweise ist eine weitergehende Sicherung des Bohrplättchens 10 gegen Herausfallen nicht erforderlich, da das Bohrplättchen 10 im wesentlichen durch axiale Bohrkraft belastet wird, die auf die Schneiden 11 und 12 in Richtung auf den Schaft 1 bzw. 19 wirkt. Beim Bohren wird also das Bohrplättchen 10 ständig gegen den Schaft 1 bzw. 19 gedrückt. Dabei legt sich die rechteckig ausgebildete Kehle 20 als Anschlag gegen die Stirnfläche 21 des Steges 17 an, womit das für die Aufnahme der Bohrkraft notwendige Widerlager gebildet ist.

Das vom Schaft 1 bzw. 19 auf das Bohrplättchen 10 zu übertragende Drehmoment wird vom angetriebenen Sechskantkopf 2 über die Wände der Nuten 3 und 4 auf die Zinken 13 und 14 übergeben, womit sich ein Form- und Kraftschluß ergibt, der allein die Nuten 3 und 4 und die Zinken 13 und 14 ohne sonstige Bauelemente umfaßt. Gleichzeitig sorgen die Zinken 13 und 14 für die selbsthemmende Verbindung zwischen Schaft 1 bzw. 19 und Bohrplättchen 10, so daß sich im Effekt auf die Zinken 13 und 14 die Funktion der selbsthemmenden Verbindung und der Drehmomentübertragung konzentriert.

Für die Gestaltung der Abschlußfläche 5 des Schaftes 1 bzw. 19 ergeben sich dabei keine besonderen Formerfordernisse, da die Abschlußfläche 5 sich radial und eben ohne besondere Bearbeitungserfordernisse erstrecken kann. Selbstverständlich ist es nicht erforderlich, die Abschlußfläche 5 eben zu gestalten. Falls Rohlinge für die Schaffung des Schaftes 1 bzw. 19 vorliegen, die an ihrem dem Sechskantkopf 2 gegenüberliegenden Ende eine Gestaltung aufweisen, die technisch unwesentlich von der Ebene abweicht, also stumpf ist, so kann natürlich auch eine solche Gestaltung verwendet werden, da die Anschlußfläche 5 lediglich die Stirnseite 21 für die vorstehend erläuterte Anschlagbildung aufzuweisen hat, die sich automatisch aus dem Einbringen der Nuten 3 und 4 ergibt. Eine im wesentlichen radial und eben verlaufende Abschlußfläche 5 ist deshalb von Vorteil, weil sich eine solche normalerweise bei der Herstellung von der hier in Rede stehenden Schäften 1 bzw. 19 von selbst ergibt und andererseits die Nuten 3 und 4 mit ihren Wänden die längstmögliche Erstreckung für die Übertragung des Drehmoments auf die Zinken 13 und 14 aufweisen.

Die bereits oben kurz erwähnte Fig. 7 zeigt den Bohrschaft 1 in einer Draufsicht auf die Abschlußfläche 5, und zwar ohne eingedrücktes Bohrplättchen. Daraus ist ersichtlich, daß die Nuten 3 und 4 einen rechteckigen Querschnitt aufweisen, der dann bei der Zusammenfügung von Bohrschaft 1 und Bohrplättchen 10 von den in der Fig. 7 nicht sichtbaren Zinken 13 und 14 des Bohrplättchens 10 satt ausgefüllt wird, wodurch die selbsthemmende Verbindung zwischen Bohrplättchen und Schaft herbeigeführt wird.

In der Fig. 8 ist eine Variante zu der Ausführungsform gemäß Fig. 7 dargestellt, gemäß der die Nuten 3 und 4 unter Vergrößerung ihrer Breite radial nach außen hin ausgebildet sind. Die Nuten 3 und 4 besitzen dementsprechend schräg verlaufende Wände 22 und 23, die dem Querschnitt der Nuten 3 und 4 gewissermaßen eine keilförmige Gestalt geben, wodurch eine besondere Einklemmung der in diese Nuten eingesetzten Zinken herbeigeführt wird. Die Schräglage der Wände 22 und 23 (und natürlich auch der gegenüberliegenden Wände) ist in der Fig. 8 übertrieben dargestellt, um die Veranschaulichung in der Figur zu verdeutlichen. In der Praxis handelt es sich nur um eine von der Geraden sehr geringfügig abweichende Schräglage, um dadurch eine besonders feste Einklemmung zu erzielen.

In den Fig. 9 bis 12 ist eine Variante zu den Ausführungsformen gemäß den Fig. 1 bis 5 dargestellt, bei der es sich darum handelt, den Nuten 3 und 4 eine besondere Gestaltung zu geben. Diese besteht darin, daß die Nuten 3 und 4 schräg zur Achse des Bohrschaftes 1 verlaufen, und zwar in Richtung zum Sechskantkopf hin mit zunehmendem Abstand der Gründe 24 und 25. Es ergibt sich damit eine der Keilform ähnliche Gestaltung des Steges 17, der dann. wie bei den Ausführungsformen gemäß den Fig. 1 bis 5 in der Stirnfläche 21 innerhalb der Abschlußfläche 5 endet. Das zu dieser Gestaltung der Halterung des Bohrschaftes 1 passende Bohrplättchen 26 ist in den Fig. 10 und 11 in Drauf- und Seitensicht (ähnlich der Darstellung in den Fig. 2 und 3) dargestellt. Das Bohrplättchen 26 besitzt die beiden entsprechend der Schräglage der Gründe 24 und 25 entsprechend gestalteten Zinken 27 und 28, deren Innenseiten 29 und 30 im wesentlichen die gleiche Schräglage aufweisen wie die Gründe 24 und 25 des Steges 17.

Beim Eindrücken des Bohrplättchens 26 bewirkt die etwa keilförmige Gestaltung des Steges 17 ein Auflaufen der Innenseiten 29 und 30 auf die schräg verlaufenden Gründe 24 und 25, so daß auf die Zinken 27 und 28 eine Spreizkraft ausgeübt wird, durch die sich das Bohrplättchen 26 besonders sicher an der Halterung des Bohrschaftes 1 festhält.

In der Fig. 12 ist die Zusammenfügung von einem Schraubenschaft 19 und dem Bohrplättchen 26 dargestellt, die im Prinzip durch das Eindrücken des in der Fig. 10 dargestellten Bohrplättchens 26 in die Nuten 3 und 4 des darüber gezeichneten Bohrschaftes 1 entsteht. Der Unterschied zwischen dem Bohrschaft 1 gemäß Fig. 9 und dem Schraubenschaft 19 gemäß Fig. 12 besteht nur hinsichtlich der Anordnung des Gewindes 18, wie dies bereits weiter oben in Zusammenhang mit den Fig. 1 und 4 beschrieben worden ist. Aus den Fig. 10 und 12 ist ersichtlich, daß die am Ende der Zinken 27 und 28 ausgebildete Kehle 31 gerundet gestaltet ist. Diese Rundung ist darum vorgesehen, um die im Bereich der Kehle 31 wirkende Spannung aufgrund einer Aufspreizung der Zinken 27 und 28 zu vermindern und an der betreffenden Stelle keine zu starke Konzentration von Spannungslinien zu erzeugen.

Abgesehen von der Schräglage der Gründe 24 und 25 der Nuten 3 und 4 und der gerundeten Ausführung der Kehle 31 entspricht die Ausführungsform gemäß den Fig. 9 bis 12 der Ausführungsform gemäß den Fig. 1 bis 5, so daß zur weiteren Erläuterung auf die Fig. 1 bis 5 verwiesen werden kann.

Die beim Bohren auftretende Bohrkraft wird bei der Ausführungsform gemäß den Fig. 9 bis 12 durch die Anlage der Innenseiten 29 und 30 der Zinken 27 und 28 gegen die Gründe 24 und 25 aufgefangen. Das aus hartem Material bestehende Bohrplättchen 26 kann die dabei auf die Zinken 27 und 28 ausgeübten Kräfte normalerweise auffangen. Wenn jedoch besonders hohe Bohrkräfte zu übertragen sind, kann es zweckmäßig sein, auch die Ausführungsform gemäß den Fig. 9 bis 12 mit einem Anschlag zu versehen (ähnlich der Wirkung der Stirnfläche 21 und der Kehle 20 gemäß den Fig. 1 und 2).

Eine entsprechende Ausführungsform ist in der Fig. 13 dargestellt. Die hier in dem Bohrplättchen 32 enthaltene Kehle 33 ist zwar im wesentlichen auch mit Rundungen 34 und 35 versehen, jedoch ist zwischen diesen beiden Rundungen der gerundete Vorsprung 36 angeordnet, der dazu dient, beim Eindrücken des Bohrplättchens 32 in die Nuten 3 und 4 des Bohrschaftes 1 bzw. des Schraubenschaftes 19 gegen die Stirnfläche 21 anzulaufen, womit besonders hohe Bohrkräfte direkt von der Stirnfläche 21 auf den Vorsprung 36 übertragen werden können. Abgesehen von dieser Besonderheit entspricht das Bohrplättchen 32 sonst vollkommen dem Bohrplättchen 26 gemäß den Fig. 10 und 11.

Eine weitere Möglichkeit der Bildung eines Anschlages ist in der Fig. 14 dargestellt. Dieser wird hier durch die Schultern 37 und 38 gebildet, die aus dem Material des Schraubenschaftes 19 in die Nuten 3 und 4 hineingedrückt sind. In der Zeichnung gemäß Fig. 14 halten die den Schultern 37 und 38 gegenüberstehenden Enden der Zinken 27 und 28 einen geringfügigen Abstand ein, da im normalen Betriebsfall die Festigkeit der Zinken 27 und 28 ausreicht, um die entstehenden Bohrkräfte aufzufangen. Wenn jedoch diese Bohrkräfte ein gewisses Maß überschreiten, dann kann sich das Bohrplättchen 26 weiter in die Nuten 3 und 4 hineindrücken, bis es dann mit den Enden seiner Zinken 27 und 28 zur Anlage an den Schultern 37 und 38 kommt.

Eine weitere Form der Herbeiführung einer Verklemmung zwischen Bohrplättchen und Halterung im Schaft ist in der Fig. 15 dargestellt. Diese zeigt den unteren Abschnitt eines Schraubenschaftes 19 mit Gewinde 18 und in seine Nuten 3 (nicht sichtbar 4) eingesetzten Bohrplättchen 39. Die Figur zeigt, daß sich die Breite der Nuten 3 (und 4) in Richtung zum Antriebsende des Schraubenschaftes 19 hin verringert, wobei die Zinken 27 (nicht sichtbar 28) einen der Form der Nuten 3 und 4 angepaßten Querschnitt aufweisen. Der Querschnitt der Nuten 3 und 4 und die Zinken 27 und 28 verlaufen also ähnlich einer Keilform, womit sich beim Eindrücken der Zinken 27 in die Nuten 3 (nicht sichtbar 28 und 4) eine starke Verkeilung und damit Selbsthemmung der Zinken 27 und 28 des Bohrplättchens 39 ergibt.

In der Fig. 16 ist eine Verbindung eines Schraubenschaftes 40 mit einem Bohrplättchen 41 gezeigt, bei der sich das Gewinde 44 bis in die Enden der Zinken 42 und 43 erstreckt. Dies geschieht hier dadurch, daß die Nuten 45 und 46 entsprechend lang am Ende des Schraubenschaftes 40 ausgebildet sind und sich die Zinken 42 und 43 fast über die gesamte Länge der Nuten 45 und 46 erstrecken. Das bis in die Zinken 42 und 43 reichende Gewinde wird dadurch erzeugt, daß das Walzen des Gewindes 44 auf den Rohling für den Gewindeschaft 40 bei eingedrücktem Bohrplättchen 41 erfolgt. Die Walzwerkzeuge erfassen dabei auch die Zinken 42 und 43 und walzen dementsprechend in diese das Gewinde 44 ein, so daß sich das aus der Fig. 16 ersichtliche, dem Gewinde folgende Längsprofil der Zinken ergibt.

Der gleichmäßige Übergang der Gänge des Gewindes 44 von dem Schraubenschaft 40 her in den Bereich der Zinken 42 und 43 ist deutlich in der Fig. 17 zu sehen, die eine 90° gedrehte Ansicht der Anordnung gemäß Fig. 16 zeigt.

Aus der Fig. 16 ist noch eine weitere Besonderheit der Verbindung zwischen Formschaft 40 und Bohrplättchen 41 dargestellt. Die Zinken 42 und 43 weichen hier in ihrem dem Schraubenschaft 40 zugewandten Endbereich von den Gründen der Nuten 45 und 46 zurück, so daß sich der aus der Fig. 16 ergebende Spalt 47 und 48 zwischen den Innenseiten der Zinken 42 und 43 und den Gründen der Nuten 45 und 46 ergibt. Auf diese Weise wird erreicht, daß sich die Anlage der Zinken 42 und 43 auf den den Schneiden 11 und 12 zugewandten Enden der Zinken 42 und 43 beschränkt, wodurch erreicht wird, daß die beim Eindrücken des Bohrplättchen 41 sich ergebenden Spreizkräfte nicht zu groß werden.

Das in Zusammenhang mit den Fig. 16 und 17 dargestellte Verfahren zum Aufwalzen des Gewindes auf die Enden der Zinken läßt sich auch dazu ausnutzen, dem Bohrplättchen 53 über eine besondere Gestaltung seiner Zinken eine besondere Verankerung an dem Bohrschaft 40 zu geben. Dies ist in der Fig. 18 dargestellt. Die Zinken 49 und 50 besitzen hier an ihren Innenseiten jeweils zwei Ausnehmungen 51 und 52, in die beim Walzen des Gewindes 44 Material aus dem Steg 17 eingedrückt wird. Es ergibt sich damit eine Art Verhakung zwischen den Zinken 49 und 50 und dem Steg 17 und damit gegenüber dem Schraubenschaft 40.

## Patentansprüche

1. Bohrer mit einem Bohrschaft (1), insbesondere mit einem ein selbstfurchendes Gewinde (18) aufweisenden Schraubenschaft (19, 40), und einem dem Antriebsende (2) des Schaftes (1, 19, 40) gegenüberliegend angeordneten gabelförmigen Bohrplättchen (10, 26, 32, 39, 41, 53) aus hartem Material, das in eine Halterung im Schaft (1, 19, 40) eingesetzt ist, die zwei diametral zueinanderliegende Nuten (3, 4; 45, 46) im Schaft (1, 19, 40) zur Aufnahme von Zinken (13, 14; 27, 28; 42, 43; 49, 50) des Bohrplättchens (10, 26, 32, 39, 41, 53) aufweist, dessen Breite dem Durchmesser des Bohrschaftes (1) entspricht, **dadurch gekennzeichnet,** daß der Schaft (1, 19, 40) stumpf in einer im wesentlichen radial ebenen Abschlußfläche (5) endet, aus der die Nuten (3, 4; 45, 46) zum Antriebsende (2) hin derart verlaufen, daß allein die in die Nuten (3, 4; 45, 46) axial eingedrückten und in diesen satt sitzenden beiden Zinken (13, 14; 27, 28; 42, 43; 49, 50) des Bohrplättchens (10, 26, 32, 39, 41, 53) dieses selbsthemmend am Schaft (1, 19, 40) halten, und daß das Drehmoment vom Schaft (1, 19, 40) über die Wände der Nuten (3,4;45,46) auf beide Zinken (13,14; 27,28; 42,43; 49,50) übertragen wird.

2. Bohrer nach Anspruch 1, dadurch gekennzeichnet, daß die Gründe (6, 7) der Nuten (3, 4) im Bereich ihrer Aufnahme der Zinken (13, 14) parallel zueinander verlaufen.

3. Bohrer nach Anspruch 1, dadurch gekennzeichnet, daß die Nuten (3, 4) derart schräg zur Schaftachse in Richtung zum Antriebsende (2) mit derart zunehmendem Abstand ihrer Gründe (24, 25) verlaufen, daß die in die Nuten (3, 4) eingedrückten Zinken (27, 28) aufgrund der durch die Schräglage der Gründe (24, 25) auf die Zinken (27, 28) ausgeübten Spreizkraft in den Nuten (3, 4)selbsthemmend gehalten werden.

4. Bohrer nach einem der Ansprüche 1 bis 3, dadurch gekennzeichnet, daß die Breite der Nuten (3, 4) so gewählt ist, daß die Zinken (13, 14) von den Wänden der Nuten (3, 4) eingeklemmt sind.

5. Bohrer nach einem der Ansprüche 1 bis 4, dadurch gekennzeichnet, daß die Zinken (13, 14) unter Vorspannung an den Gründen (6, 7) der Nuten (3, 4) anliegen.

6. Bohrer nach einem der Ansprüche 1 bis 5, dadurch gekennzeichnet, daß sich die Breite der Nuten (3, 4) radial nach außen vergrößert und die Zinken einen der Nutenform angepaßten Querschnitt aufweisen.

7. Bohrer nach einem der Ansprüche 1 bis 6, dadurch gekennzeichnet, daß sich die Breite der Nuten (3, 4) in Richtung zum Antriebsende (2) verringert und die Zinken (27. 28) einen der Nutenform angepaßten Querschnitt aufweisen.

8. Bohrer nach einem der Ansprüche 1 bis 7, dadurch gekennzeichnet, daß die radiale Anlage der Zinken (42, 43) an den Gründen bzw. Wänden der Nuten (45, 46) auf den Anfangsbereich der Zinken (42, 43) in der Nähe der Abschlußfläche (5) des Schaftes (40) beschränkt ist.

9. Bohrer mit Schraubenschaft, dessen Gewinde kalt verformt, insbesondere gewalzt ist, nach einem der Ansprüche 1 bis 8, dadurch gekennzeichnet, daß sich die Nuten (45, 46) und die Zinken (42, 43) bis in das Gewinde (44) des Schraubenschaftes (40) erstrecken, wo das Längsprofil der Zinken (42, 43) dem Gewinde (44) folgt.

10. Bohrer nach einem der Ansprüche 1 bis 9, dadurch gekennzeichnet, daß die Zinken (49, 50) auf ihrer dem Nutengrund zugewandten Seite mit Ausnehmungen (51, 52) versehen sind, in die bei einer Kaltverformung des Schraubenschaftes (40) verdrängtes Material eingedrückt ist.

11. Bohrer nach einem der Ansprüche 1 bis 10, dadurch gekennzeichnet, daß zur Aufnahme einer axialen Bohrkraft ein Anschlag (37, 38) in einer Nut (3, 4) angeordnet ist.

12. Bohrer nach einem der Ansprüche 1 bis 11, dadurch gekennzeichnet, daß die Zinken (27, 28) in einer Kehle (31) zusammenlaufen, die bei eingesetztem Bohrplättchen (26) einen Abstand von der Abschlußfläche (5) des Schaftes (1, 19) einhält.

13. Bohrer nach einem der Ansprüche 1 bis 10, dadurch gekennzeichnet, daß die Zinken (27, 28) in einer Kehle (33) zusammenlaufen, die einen Anschlag (36) gegen die Abschlußfläche (21) des Schaftes (1, 19) zur Aufnahme einer axialen Bohrkraft bildet.

14. Bohrer nach Anspruch 12 oder 13, dadurch gekennzeichnet, daß die Kehle (31) gerundet ausgebildet ist.

15. Bohrer nach einem der Ansprüche 12 bis 14, dadurch gekennzeichnet, daß die Breite der Kehle (20, 31) kleiner ist als die Breite eines Zinkens (13, 14; 27, 28; 42, 43; 49, 50) im Bereich der Kehle.

## Claims

1. Drill with a drill shank (1), in particular a screw shank (19, 40) having a self-tapping thread (18), and a forked drill bit (10, 26, 32, 39, 41, 53) of hard material arranged opposite the driving end (2) of the shank (1, 19, 40) and inserted into a holder in the shank (1, 19, 40) having two diametrically opposing grooves (3, 4; 45, 46) in the shank (1, 19, 40) for receiving prongs (13, 14; 27, 28; 42, 43; 49, 50) of the drill bit (10, 26, 32, 39, 41, 53), the width of which corresponds to the diameter of the drill shank (1), characterised in that the shank (1, 19, 40) ends bluntly in a substantially radially plane end surface (5) from which the grooves (3, 4; 45, 46) extend to the driving end (2) in such a manner that only the two prongs (13, 14; 27, 28; 42, 43; 49, 50) of the drill bit (10, 26, 32, 39, 41, 53) pressed axially into the grooves (3, 4; 45, 46) and fitting snugly therein hold the said drill bit in a self-locking manner on the shank (1, 19, 40) and that the torque is transmitted from the shank (1, 19, 40) to the two prongs (13, 14; 27, 28; 42, 43; 49, 50) via the walls of the grooves (3, 4; 45, 46).

2. Drill according to claim 1, characterised in that the bases (6, 7) of the grooves (3, 4) extend parallel to one another in the region in which they receive the prongs (13, 14).

3. Drill according to claim 1, characterised in that the grooves (3, 4) are inclined in such a manner relative to the axis of the shank in the direction of the driving end (2) with the spacing of their bases (24, 25) increasing in such a manner that the prongs (27, 28) pressed into the grooves (3, 4) are held in the grooves (3, 4) in a self-locking manner as a result of the expanding force exerted on the prongs (27, 28) by the inclined position of the bases (24, 25).

4. Drill according to one of claims 1 to 3, characterised in that the width of the grooves (3, 4) is selected in such a manner that the prongs (13, 14) are clamped by the walls of the grooves (3, 4).

5. Drill according to one of claims 1 to 4, characterised in that the prongs (13, 14) bear against the bases (6, 7) of the grooves (3, 4) in a tensioned manner.

6. Drill according to one of claims 1 to 5, characterised in that the width of the grooves (3, 4) increases radially towards the outside and the prongs have a cross section adapted to the shape of the grooves.

7. Drill according to one of claims 1 to 6, characterised in that the width of the grooves (3, 4) decreases in the direction of the driving end (2) and the prongs (27, 28) have a cross section adapted to the shape of the grooves.

8. Drill according to one of claims 1 to 7, characterised in that the prongs (42, 43) bear radially against the bases or walls of the grooves (45, 46) only in the initial region of the prongs (42, 43) in the vicinity of the end surface (5) of the shank (40).

9. Drill with a screw shank the thread of which is cold formed, in particular rolled, according to one of claims 1 to 8, characterised in that the grooves (45, 46) and the prongs (42, 43) extend into the thread (44) of the screw shank (40), where the longitudinal profile of the prongs (42, 43) follows the thread (44).

10. Drill according to one of claims 1 to 9, characterised in that the prongs (49, 50) are provided on their sides directed towards the bases of the grooves with recesses (51, 52) into which material displaced during cold forming of the screw shank (40) is pressed.

11. Drill according to one of claims 1 to 10, characterised in that a stop (37, 38) is arranged in a groove (3, 4) in order to support an axial drilling force.

12. Drill according to one of claims 1 to 11, characterised in that the prongs (27, 28) converge in a channel (31) maintaining a distance from the end surface (5) of the shank (1, 19) when the drill bit (26) is inserted.

13. Drill according to one of claims 1 to 10, characterised in that the prongs (27, 28) converge in a channel (33) forming a stop (36) against the end surface (21) of the shank (1, 19) in order to receive an axial drilling force.

14. Drill according to claim 12 or claim 13, characterised in that the channel (31) is rounded.

15. Drill according to one of claims 12 to 14, characterised in that the width of the channel (20, 31) is smaller than the width of a prong (13, 14; 27, 28; 42, 43; 49, 50) in the region of the channel.

## Revendications

1. Foret comportant une tige de perçage (1), notamment une tige filetée (19, 40) qui possède un filetage autotaraudeur (18), et une plaquette de perçage (10, 26, 32, 39, 41, 53) en matériau dur, qui est agencée en forme de fourche, est disposée à l'opposé de l'extrémité d'entraînement (2) de la tige (1, 19, 40) et est insérée dans un dispositif de retenue qui est situé dans la tige (1, 19, 40) et comporte deux rainures (3, 4; 45, 46) diamétralement opposées, qui sont formées dans la tige (1, 19, 40) et sont destinées à recevoir des dents (13, 14; 27, 28; 42, 43; 49, 50) de la plaquette de perçage (10, 26, 32, 39, 41, 53), dont la largeur correspond au diamètre de la tige de perçage (1), caractérisé en ce que la tige (1, 19, 40) se termine avec une forme obtuse par une surface terminale (5) essentiellement plane radialement et à partir de laquelle les rainures (3, 4; 45, 46) s'étendent en direction de l'extrémité d'entraînement (2) de telle sorte seules les deux dents (13, 14; 27, 28; 42, 43; 49, 50), qui sont repoussées axialement dans les rainures (3, 4; 45, 46) et s'appliquent avec une assise suffisante dans ces rainures, de la plaquette de perçage (10, 26, 32, 39, 41, 53) maintiennent cette dernière d'une manière autobloquante sur la tige (1, 19, 40), et que le couple est transmis par la tige (1, 19, 40), par l'intermédiaire des parois des rainures (3, 4; 45, 46), aux deux dents (13, 14; 27, 28; 43; 49, 50).

2. Foret selon la revendication 1, caractérisé en ce que les fonds (6, 7) des rainures (3, 4) s'étendent parallèlement l'un à l'autre dans la zone de leurs logements prévus pour les dents (13, 15).

3. Foret selon la revendication 1, caractérisé en ce que les rainures (3, 4) s'étendent obliquement par rapport à l'axe de la tige en direction de l'extrémité d'entraînement (2) avec une distance de leurs fonds (24, 25), qui augmente de telle sorte que les dents (27, 28) repoussées dans ces dernières sont retenues d'une manière autobloquante dans les rainures (3, 4) en raison de la force d'écartement qui est appliquée, en raison de la position oblique des fonds (24, 25), sur les dents (27, 28).

4. Foret selon l'une des revendications 1 à 3, caractérisé en ce que la largeur des rainures (3, 4) est choisie de telle sorte que les dents (13, 14) sont bloquées par serrage par les parois des rainures (3, 4).

5. Foret selon l'une des revendications 1 à 4, caractérisé en ce que les dents (13, 14) s'appliquent avec une précontrainte contre les fonds (6, 7) des rainures (3, 4).

6. Foret selon l'une des revendications 1 à 5, caractérisé en ce que la largeur des rainures (3, 4) augmente radialement vers l'extérieur et que les dents possèdent une section transversale adaptée à la forme des rainures.

7. Foret selon l'une des revendications 1 à 6, caractérisé en ce que la largeur des rainures (3, 4) diminue en direction de l'extrémité d'entraînement (2) et que les dents (27, 28) possèdent une section transversale adaptée à la forme des rainures.

8. Foret selon l'une des revendications 1 à 7, caractérisé en ce que l'application radiale des dents (42, 43) contre les fonds ou les parois des rainures (45, 46) est limitée à la zone de départ des dents (42, 43) à proximité de la surface terminale (5) de la tige (40).

9. Foret comportant une tige filetée, dont le filetage est produit par formage à froid, notamment est laminé, selon l'une des revendications 1 à 8, caractérisé en ce que les rainures (45, 46) et les dents (42, 43) s'étendent jusque dans le filetage (44) de la tige filetée (40), où le profil longitudinal des dents (42, 43) suit le filetage (44).

10. Foret selon l'une des revendications 1 à 9, caractérisé en ce que les dents (49, 50) comportent, sur leurs faces tournées vers le fond de la rainure, des évidements (51, 52), dans lesquels est repoussé le matériau refoulé lors d'une déformation à froid de la tige filetée (40).

11. Foret selon l'une des revendications 1 à 10, caractérisé en ce qu'une butée (37, 38) est disposée dans une rainure (3, 4) de manière à absorber une force axiale de perçage.

12. Foret selon l'une des revendications 1 à 11, caractérisé en ce que les dents (27, 28) se rejoignent au niveau d'une gorge (31) qui, lorsque la plaquette de perçage (26) est insérée, maintient un espacement par rapport à la surface terminale (5) de la tige (1, 19).

13. Foret selon l'une des revendications 1 à 10, caractérisé en ce que les dents (27, 28) se rejoignent au niveau d'une gorge (33), qui forme une butée (36) pour la surface terminale (21) de la tige (1, 19), pour absorber une force axiale de perçage.

14. Foret selon la revendication 12 ou 13, caractérisé en ce que la gorge (31) est arrondie.

15. Foret selon l'une des revendications 12 à 14, caractérisé en ce que la largeur de la rainure (20, 31) est inférieure à la largeur d'une dent (13, 14; 27, 28; 42, 43; 49, 50) au niveau de cette rainure.
